# EUROPÄISCHE PATENTSCHRIFT

(11) **EP 2 276 659 B1**
(45) Veröffentlichungstag und Bekanntmachung des Hinweises auf die Patenterteilung: **27.08.2014**
(21) Anmeldenummer: 09730939.7
(22) Anmeldetag: 01.04.2009
(51) Int. Cl.: B61K 9/08, G01G 19/04

(54) **SYSTEM ZUR MESSUNG VON BELASTUNGEN BEIM RAD/SCHIENE-KONTAKT VON SCHIENENFARZEUGEN**
SYSTEM FOR MEASURING LOADS DURING WHEEL/RAIL CONTACT OF RAIL VEHICLES
SYSTÈME DE MESURE DE CHARGES DANS LE CONTACT ROUE-RAIL DE VÉHICULES FERROVIAIRES

(30) Priorität: 09.04.2008 DE 102008018076
(43) Veröffentlichungstag der Anmeldung: 26.01.2011
(73) Patentinhaber: Schenck Process GmbH, 64293 Darmstadt (DE)
(72) Erfinder: EHMKE, Fritz, 64397 Modautal (DE); GROLL, Peter, 64297 Darmstadt (DE); MÜLLER, Ralph, 64291 Darmstadt (DE)
(86) Internationale Anmeldenummer: PCT/EP2009/002377
(87) Internationale Veröffentlichungsnummer: WO 2009/124681

(56) Entgegenhaltungen:
- EP-A- 0 468 397
- DE-A1-102006 015 924
- GB-A- 2 364 124

## Beschreibung

Die Erfindung betrifft allgemein das technische Gebiet von Schienenfahrzeugen sowie ein System zur Simulation und zur Erfassung von Belastungen, die im Rad/Schiene-Kontakt bei Schienenfahrzeugen auftreten.

Die Erfindung betrifft insbesondere ein Messsystem zur Erfassung von auf eine Schiene durch ein Schienenfahrzeug einwirkenden Kräften und/oder Momenten, wobei ein Schienenfuß in einer Aufnahmevorrichtung gelagert ist, die auf einer Messvorrichtung zur Erfassung der Kräfte und/oder Momente angeordnet ist,

Eine gattungsgemäße Vorrichtung ist beispielsweise aus der Schrift DE 10 2006 015 924 A1 bekannt. Sie betrifft eine Messstrecke an einer Schiene, mit mehreren in Schienenlängsrichtung beabstandeten und unter der Schiene angeordneten Diagnosevorrichtungen, welche die auf die Schiene einwirkende Kräfte erfassen. Dazu ist die Schiene auf eine Adapterplatte unverrückbar aufgeklemmt, welche sich über eine Zwischenplatte auf einer Kraftmessdose abstützt.

Die Kraftmessdose ist auf einem Trägerelement befestigt, das in einem Schotterbett verankert ist. Zwischen einem Schienenfuß und Kraftmessdose sind nicht näher beschriebene Folien oder unnachgiebige Werkstoffplatten zwischengelegt, die in erster Linie der elektrischen Isolation dienen und ein zuverlässiges Erfassen der Kräfte durch die Kraftmessdose und durch eine an sie angeschlossene elektrische Auswerteeinheit ermöglichen sollen.

Aus der GB 801912 A ist eine Schienenbefestigung bekannt, bei der zwischen einen Schienenfuß und eine Betonschwelle eine beispielsweise aus Gummi bestehende Zwischenplatte gelegt ist, die einerseits eine elektrische Isolierung bewirkt und andererseits für eine elastische Auflage der Schiene auf der Schwelle sorgt. Die Betonschwelle ist üblicherweise in einem Schotterbett verankert. Eine ähnliche Vorrichtung offenbart das Dokument DE 28 06 817 B1.

In der DE 10 2005 057 473 A 1 wird ein Messkörper beschrieben, der auf die Schiene einwirkende Kräfte aufnimmt und diese Kräfte entweder in die Schwelle oder in eine feste Fahrbahn ableitet. Der Begriff "feste Fahrbahn" bezeichnet im allgemeinen ein in Schienenlängsrichtung durchgehendes Betonfundament, welches das sonst übliche Schotterbett ersetzt.

Die Verwendung von Kraftmessdosen, wie sie grundsätzlich aus dem Dokument DE 39 37 318 A1 bekannt sind, hat zur Voraussetzung, dass unter der Einwirkung der zu messenden Kraft sich Verformungsteile innerhalb der Kraftmessdose verformen, wodurch sich der elektrische Widerstand von an den Verformungsteilen angebrachten Dehnungsmessstreifen verändert, was als Messwert erfasst werden kann. Eine exakte Messung mit Hilfe von Verformungsteilen, wie z.B. Kraftmessdosen oder Dehnungsmessstreifen, setzt eine möglichst starre Konstruktion des Messaufbaus voraus.

Andererseits entspricht ein so starres Befestigungssystem bestehend aus Schiene, Aufnahmeplatte, Messvorrichtung und fester Betonfahrbahn nicht der realistischen Situation eins Schottergleiskörpers. Die Abweichung kann soweit führen, dass sich die Veränderungen des elektrischen Widerstands der Verformungsteile nicht mehr proportional zu den zu messenden Kräften verhalten, wie sie in einem realistischen System auftreten. Auch eine Verklebung des Schotters kann nicht in zuverlässiger Weise zu einen realistischen System führen. Deshalb können die bekannten Vorrichtungen nicht zu einer realistischen Messung der auf die Schiene bei Überfahrt eines Fahrzeugs einwirkenden Kräfte und/oder Momente herangezogen werden.

In der Praxis besteht jedoch ein hoher Bedarf an einer Vorrichtungen zum Messen von Belastungen zwischen Schienenfahrzeugen und dem Gleiskörper, die sowohl zu realistischen als auch reproduzierbaren Ergebnissen führt. Der Forderung nach Messungen realistischer Radaufstands- und Radführungskräfte (Q- und Y-Kräfte) unter möglichst gleichbleibenden Bedingungen kommt dabei eine besondere Bedeutung zu. Die Verwendung einer festen Fahrbahn in Kombination mit dem Einsatz von Elastizitäten und Sensorik zwischen der Schiene und dem Fundament der Schiene führte bislang zu keinem zufrieden stellenden Ergebnis, wie oben erläutert. Bei weiteren bekannten Messsystemen wird die Sensorik entweder durch Direktapplikationen an realen Schottergleiskörpern messtechnisch nicht optimal ausgeführt oder aber mit Hilfe von Messgleisen realisiert, die dem realen Verhalten eines Schottergleises nicht entsprechen, da die Messgleise relativ steif ausgeführt werden.

Der Erfindung liegt daher die Aufgabe zugrunde, ein System zur Messung von Belastungen beim Rad/Schiene-Kontakt von Schienenfahrzeugen bereitzustellen, bei dem die im Gleiskörper bei Belastung durch ein Schienenfahrzeug auftretenden Kräfte und/oder Momente sowohl exakt als auch realistisch messbar sind.

Die vorliegende Erfindung sieht dazu vor, dass zwischen Schienenfuß und Messvorrichtung mindestens ein elastisches Element angeordnet ist, das eine Elastizität aufweist, welche die Elastizität eines Schotterbetts simuliert. Auf diese Weise kann ein Schotterbettersatz mit determinierbaren und weitgehend unveränderlichen Eigenschaften in dem Messsystem eingerichtet werden, der die Eigenschaften eines realen Schotterbetts simuliert. Dabei werden die mechanischen Eigenschaften und insbesondere die Elastizität des elastischen Elements so gewählt, dass sie die mechanischen Eigenschaften bzw. die Elastizität eines realen Schotterbetts für einen Gleiskörper simuliert.

Die mechanischen Eigenschaften des elastischen Elements sind im Vergleich zu den mechanischen Eigenschaften eines realen Schotterbetts deutlich konstanter, was die Durchführung mehrerer Messungen unter gleichen Bedingungen ermöglicht. Die Eigenschaften und insbesondere die Elastizität des simulierten Schotterbetts können mittels des elastischen Elements weitgehend unveränderlich gehalten werden als dies mit einem realen Schotterbett der Fall ist. Mit dem erfindungsgemäßen System wird somit eine sowohl realistische als auch reproduzierbare Messung der auf einen Gleiskörper wirkenden Kräfte möglich, die durch einen fahrenden oder stehenden Schienenfahrzeug verursacht werden.

Bei einer Ausführungsform der vorliegenden Erfindung ist das elastische Element als eine elastische Einlage oder Platte ausgebildet, die zwischen dem Schienenfuß und einer Aufnahmevorrichtung zur Aufnahme des Schienenfußes angeordnet ist. Um optimale Messergebnisse zu erzielen, ist diese Aufnahmevorrichtung zur Aufnahme des Schienenfußes auf einer Fundamentplatte beweglich gelagert. Die Aufnahmevorrichtung zur Aufnahme des Schienefußes kann beispielsweise als Stahlkonturteil oder als Betonformteil ausgebildet sein. Die Fundamentplatte ist unbeweglich und fest verankert. Die bewegliche Lagerung der Aufnahmevorrichtung zur Aufnahme des Schienenfußes lässt eine gewisse Bewegungsfreiheit der Aufnahmevorrichtung in senkrechter Richtung und/oder in horizontaler Richtung gegenüber der unbeweglichen Fundamentplatte zu.

Dadurch können die Belastungen eines Schienenfahrzeugs auf die Schiene Bewegungen der Aufnahmevorrichtung der Schiene in senkrechter Richtung und/oder in horizontaler Richtung gegenüber der Fundamentplatte bewirken. Die Bewegungen der Aufnahmevorrichtung in senkrechter Richtung und/oder in horizontaler Richtung gegenüber der Fundamentplatte können mit Hilfe von Messgeräten erfasst werden und aus den Messwerten können die auftretenden Belastungen der Schiene ermittelt werden. Dazu wird vorzugsweise mindestens ein Messgerät zwischen der Vorrichtung zur Aufnahme des Schienenfußes und der Fundamentplatte zum Erfassen der auf die Schiene einwirkenden Kräfte und/oder der infolge der Kräfte entstehenden Momente angeordnet.

Bei diesem Aufbau des erfindungsgemäßen Messsystems bleiben die Einflüsse des elastischen Elements bzw. der elastischen Platte oder der elastischen Einlage, welche die Einflüsse eines realen Schotterbetts auf einen realen Gleiskörper simulieren, auf die Vorrichtung zur Aufnahme des Schienenfußes beschränkt. Da die Vorrichtung zur Aufnahme des Schienenfußes und des elastischen Elements vom übrigen Messaufbau entkoppelt ist und die Messgeräte an der beweglichen Kopplung zwischen der Aufnahmevorrichtung und der Fundamentplatte angeordnet sind, können zuverlässige und reproduzierbare Messungen an der beweglichen Kopplung zwischen der Aufnahmevorrichtung und der Fundamentplatte vorgenommen werden.

Die Erfindung stellt somit ein Messsystem bereit, bei dem keine Sensorik mehr im Schotterbett vorgesehen sein muss. Bei dem erfindungsgemäßen Messsystem sind die elastischen Elemente bzw. die elastischen Platten oder Einlagen unmittelbar unter dem Schienenfuß angeordnet, wo sie einen entsprechenden Einfluss auf die Schiene ausüben, wie er auch bei realen Gleiskörpern vorhanden ist. Durch die Trennung der Messgeräte von den elastischen Teilen des Messaufbaus bleiben die Messungen exakt und unter gleichen Randbedingungen reproduzierbar.

Dabei können Messgeräte zum Erfassen der auf die Schiene in senkrechter Richtung und/oder in horizontaler Richtung (Radaufstands- und Radführungskräfte) einwirkenden Kräfte und/oder Momente vorgesehen sein. Zusätzlich oder alternativ können Messgeräte zum Erfassen nur der in horizontaler Richtung auf die Schiene einwirkenden Kräfte (x/y-Kräfte) oder Momente vorgesehen sein. Aus der Kombination der beiden senkrechten und horizontalen Freiheitsgrade lässt sich auch ein Kippmoment der Schiene unter Belastung ermitteln. Das Kippmoment der Schiene lässt sich kontrollieren, indem das elastische Element bzw. die elastische Platte oder Einlage quer zur Schienenlängsrichtung fixiert wird.

Durch das elastische Element unterhalb des Schienenfußes wird ein Messaufbau geschaffen, der die reale Situation eines Gleiskörpers mit auf einem Schotterbett gelagerten Schienen simuliert. Das elastische Element bzw. die elastische Platte oder Einlage bietet eine gewisse Bewegungsfreiheit der Schiene sowohl in vertikaler Richtung als auch in horizontaler Richtung, der dem Freiheitsgrad des Gleises durch ein reales Schotterbett entspricht. Durch das elastische Element bzw. die elastische Platte oder Einlage wird folglich eine Bewegungsfreiheit für die Schiene geschaffen, die der Bewegungsfreiheit eines realen Gleiskörpers auf einem Schotterbett entspricht.

Bei dem erfindungsgemäßen Messsystem sind neben der Bewegungsfreiheit der Schiene in der Aufnahmevorrichtung weitere Bewegungsfreiheiten für die relative Bewegung der Aufnahmevorrichtung gegenüber dem Fundament eingerichtet. Diese Bewegungsfreiheiten der Aufnahmevorrichtung gegenüber dem Fundament sind ausreichend, dass sich dehnungssensitive Verformungsteile von Messgeräten der Messvorrichtung, wie z.B. Kraftmessdosen oder Dehnungsmessstreifen unter der Kraft- und/oder Momenteinwirkung auf die Schiene bei Belastung verformen können und die auftretenden Kräfte und/oder Momente dadurch zuverlässig, reproduzierbar und realistisch messbar werden.

Bei einer Ausführungsform des Messsystems nach der vorliegenden Erfindung können durch die feste Fahrbahn langzeitstabile Verhältnisse geschaffen werden, die eine höhere messtechnische Reproduzierbarkeit ermöglichen. Das heißt, dass einerseits mit der erfindungsgemäßen Vorrichtung aufgrund der variablen oder weichen Komponenten im Aufbau der Vorrichtung solche Messbedingungen geschaffen werden können, die den realistischen Verhältnissen der betreffenden Belastungssituation möglichst nahe kommen. Andererseits bleibt mit der erfindungsgemäßen Messvorrichtung aufgrund der festen Fahrbahn trotz der variablen oder weichen Komponenten im Aufbau der Vorrichtung eine hohe messtechnische Reproduzierbarkeit der Belastungssituation erhalten.

Mit dem erfindungsgemäßen Messsystem können die senkrecht wirkenden Radaufstandskräfte und die waagrecht wirkenden Radführungskräfte (Q- und Y-Kräfte) unter möglichst gleichbleibenden und realistischen Bedingungen gemessen werden. Ferner können mit dem erfindungsgemäßen Messsystem zum Testen von Schienenfahrzeugen die für die Möglichkeit eines Entgleisens maßgebenden Verhältnisse, wie z.B. das Y/Q-Kräftepaar oder die in horizontaler Ebene wirkenden x/y-Kraftkomponenten, im Bogenbereich aufgenommen werden. Im normalen Schotterbett ist eine solche Messung kaum reproduzierbar, da eine reales Schotterbett dafür zu instabil ist.

Das erfindungsgemäße Messsystem kann zur Messung von Betriebsmessgrößen von Schienen verwendet werden, wie z.B. Kräfte, Momente oder Schwingungen, die durch stehende oder fahrende Schienenfahrzeuge auf den Gleiskörper ausgeübt werden. Das erfindungsgemäße Messsystem kann insbesondere zur Erfassung des Fahrverhaltens von Schienenfahrzeugen in Kurven verwendet werden, da bei Kurvenfahrt die Gefahr des Entgleisen erhöht ist. Um dieser Gefahr zu begegnen, können aufgrund der mit dem erfindungsgemäßen Messsystem ermittelten Betriebsmesswerte bestimmte Parameter an den Schienenfahrzeugen verändert werden, wie z.B. das Radprofil, die Gewichtsverteilung oder der Achsstand, um den Rad/Schiene-Kontakt zu verbessern. Außerdem können mit Hilfe der ermittelten Betriebsmesswerte bestimmte Parameter des Gleiskörpers verändert werden, wie z.B. der Kurvenradius oder das Schienenprofil.

Besondere Ausgestaltungen und vorteilhafte Ausführungsformen der Erfindung sind in den Unteransprüchen angegeben. Nachfolgend wird die Erfindung anhand von Ausführungsbeispielen und der beigefügten Zeichnungen näher erläutert. Zu den Zeichnungen:
- Figur 1: zeigt eine Schnittdarstellung eines Systems gemäß einer Ausführungsform der vorliegenden Erfindung zur Messung von Kräften und/oder Momenten, die durch fahrende oder stehende Schienenfahrzeuge auf eine Schiene einwirken;
und
- Figur 2: eine perspektivische Explosionsdarstellung einer oberen Baugruppe des Messsystems gemäß einer Ausführungsform des Verfahrens nach der vorliegenden Erfindung.

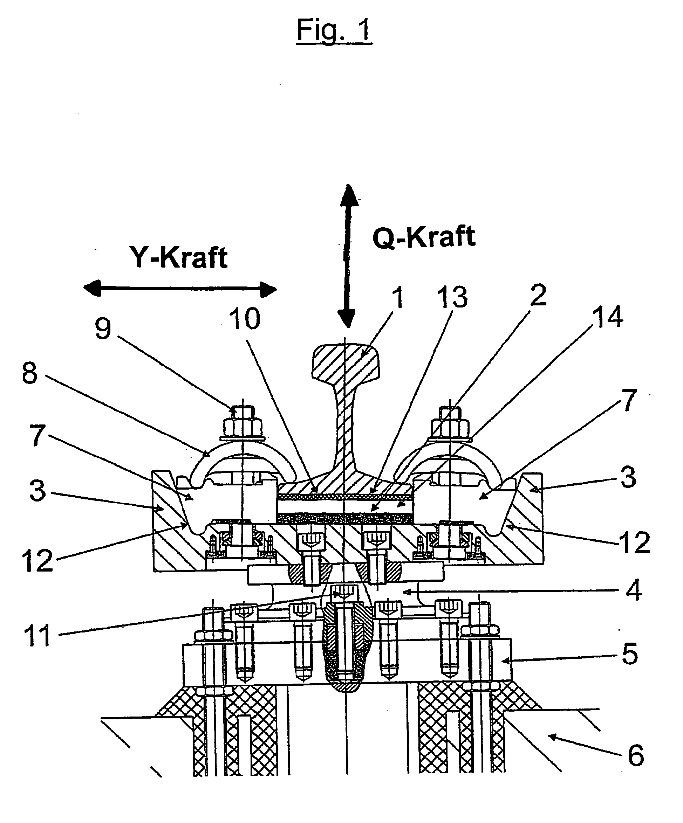

In der Vertikalschnittdarstellung von Figur 1 ist der Aufbau des erfindungsgemäßen Messsystems gemäß einer Ausführungsform zu erkennen. Eine Fahrschiene 1 eines Schienenstrangs für Schienenfahrzeuge, insbesondere schnellfahrende Züge, besitzt einen Schienenfuß 10, der in dem in Figur 1 dargestellten montierten Zustand in einer Vorrichtung 3 zur Aufnahme des Schienenfußes 10 gehalten ist. Diese Vorrichtung 3 zur Aufnahme des Schienefußes 10 kann beispielsweise als Stahlkonturteil oder als Betonformteil ausgebildet sein. Bei der in Figur 1 gezeigten Ausführungsform ist die Vorrichtung 3 zur Aufnahme des Schienenfußes 10 als Stahlteilkontur ausgebildet, in dessen oberem Teil ein wanneförmiger Schienenkanal 12 derart geformt ist, dass darin der Schienenfuß 10 einschließlich Befestigungselemente 7 aufgenommen werden können.

In dem Schienenkanal 12 wird der Schienenfuß 10 der Schiene 1 zwischen zwei gegenüberliegenden Winkelführungsplatten 7 jeweils durch eine den Schienenfuß 10 von oben beaufschlagende Spannklemme 8 und eine Schienenschraube 9 fixiert, die jeweils von oben durch die Winkelführungsplatte 7 und die Spannklemme 8 in die Betonschwelle 3 eingeschraubt ist. Auf diese Weise ruht jede der beiden Winkelführungsplatten 7 formschlüssig in dem Profil bzw. Schienenkanal 12 der Betonschwelle 3 und ist an dieser mittels der Schwellenschrauben 9 fest verankert. Damit ist die Schiene 1 in waagrechter Richtung durch die Winkelführungsplatten 7 und in senkrechter Richtung durch die Spannklemmen 8 in dem Schienenkanal 12 der Schienenaufnahmevorrichtung 3 fixiert.

Bei kurviger Schienenführung können die Winkelführungsplatten 7 je nach Kurvenradius ausgetauscht und durch geeignete Zwischenlagen ersetzt werden. Die Befestigungskomponenten 7, 8, 9 zur Fixierung der Schiene 1 können an der Betonschwelle 3 auch vormontiert werden, was eine besonders wirtschaftliche Erstellung des Schienenbefestigungssystems bzw. Messsystems ermöglicht.

Unterhalb des Schienenfußes 10 ist mindestens ein elastisches Element angeordnet ist, das eine Elastizität aufweist, die der Elastizität eines Schotterbetts weitgehend entspricht. Dadurch kann ein Schotterbettersatz mit determinierbaren und im Wesentlichen unveränderlichen Eigenschaften in der Schienenbefestigung des Messsystems eingerichtet werden, der die Eigenschaften eines realen Schotterbetts simuliert. Bei der in Figur 1 dargestellten Ausführungsform wird als elastisches Element eine elastische Einlage oder Platte 2 verwendet, die zwischen dem Schienenfuß 10 und der als Betonschwelle 3 ausgebildeten Aufnahmevorrichtung zur Aufnahme des Schienenfußes 10 angeordnet ist

Die Fundamentplatte 5 ist unbeweglich im Fundament 6 fest verschraubt, wobei das Fundament 6 beispielsweise eine feste Fahrbahn sein kann, wie sie zur Schienenführung für Hochgeschwindigkeitszüge verwendet wird. Die Schwelle 3 ist nicht direkt mit der Fundamentplatte 5 verbunden, sondern über eine gelenkige Kopplung 11 mit der Fundamentplatte 5 beweglich gekoppelt. Diese gelenkige Kopplung 11 kann beispielsweise aus einer Schraubverbindung zwischen der Schwelle 3 und der Fundamentplatte 5 bestehen, die eine gewisse Beweglichkeit der Schwelle 3 gegenüber der Fundamentplatte 5 zulässt. Die Schiene 1, die Schwelle bzw. die Vorrichtung 3 zur Aufnahme des Schienenfußes 10, das dazwischen angeordnete elastische Element, Einlage oder Platte 2 und die Befestigungselemente 7, 8, 9 können somit auch als eine obere Baugruppe 1, 2, 3 betrachtet werden, die gegenüber der Fundamentplatte 5 und der festen Fahrbahn 6 über die gelenkige Kopplung 11 beweglich gelagert ist.

Die bewegliche Lagerung der Aufnahmevorrichtung bzw. Betonschwelle 3 zur Aufnahme des Schienenfußes 10 durch die gelenkige Kopplung 11 ermöglicht eine gewisse Beweglichkeit der Betonschwelle 3 und damit der Schiene 1 gegenüber der unbeweglichen Fundamentplatte 5 in senkrechter und horizontaler Richtung. Diese Bewegungsfreiheit kann beispielsweise über mechanische Anschläge oder einen Kippschutz eingeschränkt werden. Ferner kann die Bewegungsfreiheit der oberen Baugruppe 1, 2, 3 mittels geeigneter Federn oder Dämpfer in ihrer Steifigkeit und/oder Dämpfung entsprechend eingestellt werden.

Auf die Fahrschiene 1 wirken durch ein darauf stehendes oder überfahrendes Schienenfahrzeug Kräfte, die in Figur 1 durch das senkrecht und waagrecht wirkende Kräftepaar (Q- und Y-Kräfte bzw. Radaufstands- und Radführungskräfte) jeweils mit Doppelpfeilen angedeutet sind. Die Belastungen eines Schienenfahrzeugs verursachen an der Schiene 1 wirkende Kräfte, Momente oder Schwingungen, die sich bei dem erfindungsgemäßen Aufbau in relativen Bewegungen der Schienenaufnahmevorrichtung 1, 2, 3 gegenüber der Fundamentplatte 5 auswirken. Diese relativen Bewegungen können mit Hilfe von Messgeräten 4 erfasst werden und aus den Messwerten können Rückschlüsse auf die Belastungen der Schiene 1 sowie auf das Fahrverhalten des Schienenfahrzeugs gezogen werden.

Dazu sind beispielsweise neben der gelenkigen Kopplung 11 ein oder mehrere Messgeräte 4 angeordnet, welche die Kräfte, Momente und/oder Schwingungen der Schiene 1 erfassen. Die Betonschwelle 3 der oberen Baugruppe 1, 2, 3 wird folglich über die Kopplung 11 und die Kraftmessdosen 4 auf die Fundamentplatte 5 und das Betonbett 6 abgestützt, so dass die Messgeräte 4 jede Bewegung der oberen Baugruppe 1, 2, 3 gegenüber dem Fundament 5, 6 messen können. Dadurch können die Messgeräte 4 auch den Kraftfluss und den Momentfluss der Schiene 1 unmittelbar erfassen. Die Messgeräte 4 können beispielsweise als Kraftmessdosen 4 oder eine sogenannte Wägedisk ausgeführt sein, die beispielsweise Dehnungsmesselemente enthalten, welche die Bewegungen der Schiene erfassen. Die Messsignale der Messgeräte 4 werden einer geeigneten Auswerteeinheit (nicht gezeigt) zugeführt, welche die ermittelten Messsignale bzw. Messwerte auswertet.

Wie aus der vorliegenden Beschreibung hervorgeht, ist bei dem erfindungsgemäßen Messsystem das normale verdichtete oder unverdichtete Schotterbett durch ein Betonbett ersetzt, welches unter der Last der über die Schiene 1 laufenden Fahrzeugachsen zunächst keine elastische Nachgiebigkeit zeigt. Diese fehlende elastische Nachgiebigkeit des Betonbetts ist bei dem erfindungsgemäßen Messsystem ersetzt durch die Elastizität des elastischen Elements bzw. der elastischen Einlage oder Platte 2. Das elastische Element bzw. die elastische Einlage oder Platte 2 besitzt beispielsweise eine Federsteifigkeit von etwa 22,5 kN/mm und erlaubt somit eine Einsenkung der Schiene unter Last von bis zu 1,5 mm.

Wie oben erläutert, befindet sich diese elastische Einlage 2 nicht unterhalb der Betonschwelle 3, wie das bei realen Gleiskörpern der Fall wäre, sondern direkt unterhalb des Schienenfußes 10, nämlich zwischen dem Schienenfuß 10 und der Betonschwelle 3. Je nach Anforderung können auch eine Zwischenplatte mit anderen und/oder oder mehrere Zwischenplatten mit unterschiedlichen Steifigkeiten verwendet werden. Es können auch eine Anzahl von elastischen Elementen 2 und eine Anzahl von starren oder metallischen Zwischenlagen abwechselnd übereinander gestapelt unterhalb des Schienenfußes 10 angeordnet werden, wie nachfolgend beschieben.

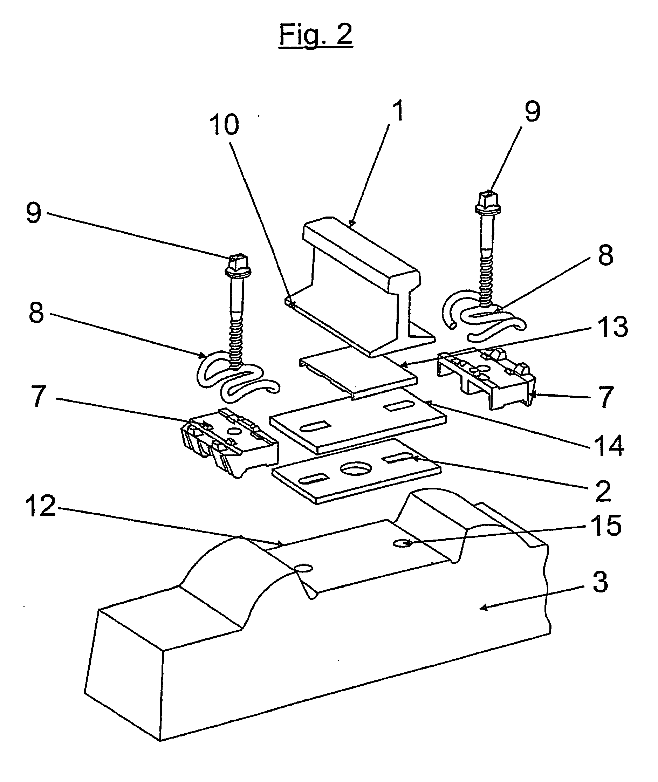

Figur 2 zeigt eine perspektivische Explosionsdarstellung einer oberen Baugruppe des Messsystems gemäß einer Ausführungsform des Verfahrens nach der vorliegenden Erfindung. Bei dieser Ausführungsform umfasst die obere Baugruppe im Wesentlichen die Schiene 1, die Aufnahmevorrichtung 3 zur Aufnahme des Schienenfußes 10, eine Anzahl von dazwischen angeordneten elastischen Elementen, Einlagen oder Platten 13, 14, 2 sowie mehrere Befestigungselemente 7, 8, 9.

In Figur 2 ist zu erkennen, dass in der als Betonschwelle 3 ausgebildeten Aufnahmevorrichtung zur Aufnahme des Schienenfußes 10 ein Schienenkanal 12 geformt ist, der so bemessen ist, dass der Schienenfuß 10 zusammen mit den beiden Winkelführungsplatten 7 darin aufgenommen werden können. Ferner sind in der Betonschwelle 3 im Bereich des Schienenkanals 12 Bohrungen 16 für die Schienenschrauben 9 ausgebildet.

Die in der Draufsicht W-förmige Spannklemme 8 hält mit den äußeren Federarmen die Schiene 1 elastisch in ihrer Position im Schienenkanal 12 der Betonschwelle 3 und seitlich wird die Schiene 1 durch die Winkelführungsplatten 8 geführt. Die von der Schiene 1 kommenden lateralen Kräfte werden über die Winkelführungsplatten 7 und den Lagenstapel mit den Platten 13, 14 und der elastischen Einlage 2 auf den Betonkörper der Schwelle 3 übertragen. Durch die den Schienenfuß 10 überragende Mittelschleife der Spannklemme 8 besitzt das Befestigungssystem eine zweite Steifigkeit, die eine Überbeanspruchung der Federarme der Spannklemme 8 oder deren plastische Verformung verhindert. Gleichzeitig dient die Mittelschleife als Kippschutz für die Schiene 1.

In den Schienenkanal 12 der Schwelle 3 werden zwischen die Unterseite des Schienenfußes 10 und dem Boden des Schienenkanals 12 ein sandwichartiger Stapel bestehend aus Lagen unterschiedlichen Materials angeordnet. Dieser Stapel umfasst bei der in Figur 2 dargestellt Ausführungsform von oben nach unten eine Isolierplatte 13, eine metallische Zwischenplatte 14 und eine elastische Einlage oder Platte 2. Die Isolierplatte 13 kann aus einem inkompressiblen Kunststoff bestehen und dient als elektrische Isolierung der Schiene 1 gegenüber sonstigen elektrisch leitenden Teilen der Schienenbefestigung. Die Zwischenplatte 14 kann aus Metall gefertigt sein und dient als Distanzelement für den Schienenfuß 10 bezüglich der Schwelle 3.

Die elastische Einlage oder Platte 2 besteht beispielsweise aus einem hart-elastischen Kunststoff und weist eine solche Elastizität auf, die der Elastizität eines normalen Schotterbetts für die Schiene 1 entspricht. Auf diese Weise simuliert die elastische Einlage oder Platte 2 den Einfluss eines Schotterbetts auf das Verhalten der Schiene 1 bei Belastung durch ein stehendes oder überfahrendes Schienefahrzeug. Aufgrund der Simulation eines Schotterbetts durch das elastische Element bzw. die elastische Einlage oder Platte 2, kann bei dem erfindungsgemäßen Messsystem auf die Einrichtung eines realen Schotterbetts verzichtet werden, wobei dennoch realistische sowie reproduzierbare Messwerte erzielt werden können.

### BEZUGSZEICHENLISTE

- 1: Fahrschiene
- 2: Elastisches Element, Elastische Einlage, Elastische Platte
- 3: Aufnahmevorrichtung zur Aufnahme des Schienenfuß bzw. Betonschwelle
- 4: Messgerät bzw. Kraftmessdose oder Wägedisk
- 5: Fundamentplatte
- 6: Fundament bzw. feste Fahrbahn
- 7: Winkelführungsplatte
- 8: Spannklemme
- 9: Schwellenschraube
- 10: Schienenfuß
- 11: gelenkige Kopplung zwischen oberer Baugruppe 1, 2, 3 und Fundament 5, 6
- 12: Schienenkanal in der Betonschwelle 3
- 13: Isolierplatte
- 14: Zwischenplatte
- 15: Bohrungen für die Schienenschrauben 9 in der Betonschwelle 3

## Patentansprüche

1. System zur Erfassung von auf eine Schiene (1) durch ein Schienenfahrzeug einwirkenden Kräften und/oder Momenten, wobei ein Schienenfuß (10) in einer Aufnahmevorrichtung (3) gelagert ist, die auf einer Messvorrichtung (4) zur Erfassung der Kräfte und/oder Momente angeordnet ist,
**dadurch gekennzeichnet,**
**dass** zwischen dem Schienenfuß (10) und der Messvorrichtung (4) mindestens ein elastisches Element (2) angeordnet ist, das eine Elastizität aufweist, welche die Elastizität eines Schotterbetts simuliert.

2. System gemäß Anspruch 1, wobei das elastische Element (2) als elastische Einlage oder elastische Platte ausgebildet ist, die zwischen dem Schienenfuß (10) und der Aufnahmevorrichtung (3) zur Aufnahme des Schienenfußes (10) angeordnet ist.

3. System nach einem der vorangehenden Ansprüche, wobei mehrere elastische Elemente (2) zwischen dem Schienenfuß (10) und der Messvorrichtung (4) übereinander gestapelt angeordnet sind.

4. System nach einem der vorangehenden Ansprüche, wobei der Schienenfuß (10) auf einer Anzahl von elastischen Elementen (2), elastischen Einlagen oder elastischen Platten gelagert ist.

5. System nach einem der vorangehenden Ansprüche, wobei eine Anzahl von elastischen Elementen (2) mit einer Anzahl von starren oder metallischen Zwischenlagen abwechselnd übereinander gestapelt zwischen dem Schienenfuß (10) und der Messvorrichtung (4) angeordnet sind.

6. System nach einem der vorangehenden Ansprüche, wobei das elastische Element (2) als elastische Einlage oder elastische Platte ausgebildet ist, die in der Aufnahmevorrichtung (3) zur Aufnahme des Schienenfußes (10) formschlüssig aufgenommen und unterhalb des Schienenfußes (10) angeordnet ist.

7. System nach einem der vorangehenden Ansprüche, wobei die Aufnahmevorrichtung (3) zur Aufnahme des Schienenfußes (10) als Betonschwelle ausgebildet ist.

8. System nach einem der vorangehenden Ansprüche, wobei die Aufnahmevorrichtung (3) mit dem darin aufgenommenen Schienenfuß (10) und dem elastischen Element (2) eine separate Baugruppe (1, 2, 3) bilden, die auf einem festen Fundament (5, 6) beweglich gelagert ist.

9. System nach dem vorangehenden Anspruch, wobei die Aufnahmevorrichtung (3) zur Aufnahme des Schienenfußes (10) auf einer Fundamentplatte (5) beweglich gelagert ist, so dass die Aufnahmevorrichtung (3) in senkrechter Richtung und/oder in horizontaler Richtung gegenüber der Fundamentplatte (5) bewegbar ist.

10. System nach dem vorangehenden Anspruch, wobei zwischen der Aufnahmevorrichtung (3) zur Aufnahme des Schienenfußes (10) und der Fundamentplatte (5) mindestens ein Messgerät (4) zum Erfassen der auf die Schiene (1) einwirkenden Kräfte und/oder Momente angeordnet ist.

11. System nach einem der beiden vorangehenden Ansprüche, wobei die Fundamentplatte (5) als feste Fahrbahn eines Gleiskörpers für Schienenfahrzeuge ausgebildet ist oder auf einer festen Fahrbahn angeordnet ist.

12. System nach einem der vorangehenden Ansprüche, wobei Messgeräte (4) zum Erfassen der auf die Schiene in senkrechter Richtung und/oder in horizontaler Richtung einwirkenden Kräfte und/oder Momente vorgesehen sind.

13. System nach einem der vorangehenden Ansprüche, wobei das elastische Element (2) quer zur Längsrichtung der Schiene (1) fixiert ist.

14. System nach einem der vorangehenden Ansprüche, wobei das elastische Element (2) aus einem Material gefertigt ist, dessen mechanischen Eigenschaften im Wesentlichen den mechanischen Eigenschaften eines Schotterbetts entspricht.

15. System nach einem der vorangehenden Ansprüche, wobei das elastische Element (2) aus einem Material gefertigt ist, dessen Elastizität im Wesentlichen der Elastizität eines Schotterbetts entspricht.

16. System nach einem der vorangehenden Ansprüche, wobei das System in einer Messstrecke vorgesehen ist, die Teil eines realen Gleiskörpers für Schienenfahrzeuge ist.

## Claims

1. System for detecting forces and/or moments acting on a rail (1) by means of a rail vehicle, wherein a rail foot (10) is mounted in a receiving device (3) which is arranged on a measuring device (4) for detecting the forces and/or moments,
**characterized in that**
at least one elastic element (2) which has an elasticity which simulates the elasticity of a ballast bed is arranged between the rail foot (10) and the measuring device (4).

2. System according to Claim 1, wherein the elastic element (2) is designed as an elastic insert or elastic plate which is arranged between the rail foot (10) and the receiving device (3) for receiving the rail foot (10).

3. System according to either of the preceding claims, wherein a plurality of elastic elements (2) are arranged stacked above one another between the rail foot (10) and the measuring device (4).

4. System according to one of the preceding claims, wherein the rail foot (10) is mounted on a number of elastic elements (2), elastic inserts or elastic plates.

5. System according to one of the preceding claims, wherein a number of elastic elements (2) are arranged in a manner stacked above one another in an alternating manner with a number of rigid or metallic intermediate layers between the rail foot (10) and the measuring device (4).

6. System according to one of the preceding claims, wherein the elastic element (2) is designed as an elastic insert or elastic plate which is accommodated in a form-fitting manner in the receiving device (3) for receiving the rail foot (10) and is arranged below the rail foot (10).

7. System according to one of the preceding claims, wherein the receiving device (3) for receiving the rail foot (10) is designed as a concrete sleeper.

8. System according to one of the preceding claims, wherein the receiving device (3) with the rail foot (10) accommodated therein and with the elastic element (2) forms a separate subassembly (1, 2, 3) which is mounted movably on a fixed foundation (5, 6).

9. System according to the preceding claim, wherein the receiving device (3) for receiving the rail foot (10) is mounted movably on a foundation plate (5), and therefore the receiving device (3) is movable in the vertical direction and/or in the horizontal direction in relation to the foundation plate (5).

10. System according to the preceding claim, wherein at least one measuring apparatus (4) for detecting the forces and/or moments acting on the rail (1) is arranged between the receiving device (3) for receiving the rail foot (10) and the foundation plate (5).

11. System according to either of the two preceding claims, wherein the foundation plate (5) is designed as a fixed trackway of a track body for rail vehicles or is arranged on a fixed trackway.

12. System according to one of the preceding claims, wherein measuring apparatuses (4) for detecting the forces and/or moments acting on the rail in the vertical direction and/or in the horizontal direction are provided.

13. System according to one of the preceding claims, wherein the elastic element (2) is fixed transversely with respect to the longitudinal direction of the rail (1).

14. System according to one of the preceding claims, wherein the elastic element (2) is manufactured from a material, the mechanical properties of which substantially correspond to the mechanical properties of a ballast bed.

15. System according to one of the preceding claims, wherein the elastic element (2) is manufactured from a material, the elasticity of which substantially corresponds to the elasticity of a ballast bed.

16. System according to one of the preceding claims, wherein the system is provided in a measuring section which is part of an actual track body for rail vehicles.

## Revendications

1. Système de détection de forces et/ou de couples agissant sur un rail (1) par le biais d'un véhicule ferroviaire, une base de rail (10) étant supportée dans un dispositif récepteur (3) qui est disposé sur un dispositif de mesure (4) pour détecter les forces et/ou les couples,
**caractérisé en ce**
**qu'**entre la base de rail (10) et le dispositif de mesure (4) est disposé au moins un élément élastique (2) qui présente une élasticité simulant l'élasticité d'un lit de ballast.

2. Système selon la revendication 1, dans lequel l'élément élastique (2) est réalisé sous forme d'insert élastique ou de plaque élastique disposé(e) entre la base de rail (10) et le dispositif récepteur (3) pour recevoir la base de rail (10).

3. Système selon l'une quelconque des revendications précédentes, dans lequel plusieurs éléments élastiques (2) sont disposés de manière empilée les uns sur les autres entre la base de rail (10) et le dispositif de mesure (4).

4. Système selon l'une quelconque des revendications précédentes, dans lequel la base de rail (10) est supportée sur une pluralité d'éléments élastiques (2), d'inserts élastiques ou de plaques élastiques.

5. Système selon l'une quelconque des revendications précédentes, dans lequel une pluralité d'éléments élastiques (2) empilés les uns sur les autres en alternance avec une pluralité de couches intermédiaires rigides ou métalliques sont disposés entre la base de rail (10) et le dispositif de mesure (4).

6. Système selon l'une quelconque des revendications précédentes, dans lequel l'élément élastique (2) est réalisé sous forme d'insert élastique ou de plaque élastique reçu(e) par engagement par correspondance de forme dans le dispositif récepteur (3) pour recevoir la base de rail (10) et disposé(e) en dessous de la base de rail (10).

7. Système selon l'une quelconque des revendications précédentes, dans lequel le dispositif récepteur (3) pour recevoir la base de rail (10) est réalisé sous forme de traverse en béton.

8. Système selon l'une quelconque des revendications précédentes, dans lequel le dispositif récepteur (3) avec la base de rail (10) reçue dans celui-ci et l'élément élastique (2) forme un module séparé (1, 2, 3) qui est monté de manière déplaçable sur une fondation fixe (5, 6).

9. Système selon la revendication précédente, dans lequel le dispositif récepteur (3) pour recevoir la base de rail (10) est monté de manière déplaçable sur une plaque de fondation (5), de sorte que le dispositif récepteur (3) puisse être déplacé dans la direction verticale et/ou dans la direction horizontale par rapport à la plaque de fondation (5).

10. Système selon la revendication précédente, dans lequel entre le dispositif récepteur (3) pour recevoir la base de rail (10) et la plaque de fondation (5) est disposé au moins un appareil de mesure (4) pour détecter les forces et/ou les couples agissant sur le rail (1).

11. Système selon l'une quelconque des deux revendications précédentes, dans lequel la plaque de fondation (5) est réalisée sous forme de voie fixe d'un corps de rail pour véhicules ferroviaires ou est disposée sur une voie fixe.

12. Système selon l'une quelconque des revendications précédentes, dans lequel des appareils de mesure (4) sont prévus pour détecter les forces et/ou les couples agissant sur le rail dans la direction verticale et/ou dans la direction horizontale.

13. Système selon l'une quelconque des revendications précédentes, dans lequel l'élément élastique (2) est fixé transversalement à la direction longitudinale du rail (1).

14. Système selon l'une quelconque des revendications précédentes, dans lequel l'élément élastique (2) est fabriqué en un matériau dont les propriétés mécaniques correspondent essentiellement aux propriétés mécaniques d'un lit de ballast.

15. Système selon l'une quelconque des revendications précédentes, dans lequel l'élément élastique (2) est fabriqué en un matériau dont l'élasticité correspond essentiellement à l'élasticité d'un lit de ballast.

16. Système selon l'une quelconque des revendications précédentes, dans lequel le système est prévu dans
une section de mesure qui fait partie d'un corps de rail réel pour véhicules ferroviaires.
